# EUROPÄISCHE PATENTSCHRIFT

(11) **EP 0 608 524 B1**
(45) Veröffentlichungstag und Bekanntmachung des Hinweises auf die Patenterteilung: **17.10.2001**
(21) Anmeldenummer: 93119870.9
(22) Anmeldetag: 09.12.1993
(51) Int. Cl.: G06F 11/00, G06F 1/32

(54) **Vorrichtung zum Betreiben eines Mikroprozessors**
Device to operate a microprocessor
Dispositif pour opérer un micro-ordinateur

(30) Priorität: 28.01.1993 DE 4302232
(43) Veröffentlichungstag der Anmeldung: 03.08.1994
(73) Patentinhaber: ROBERT BOSCH GMBH, 70442 Stuttgart (DE)
(72) Erfinder: Knecht, Gerhard, Dipl.-Ing. (FH), D-76473 Iffezheim (DE)

(56) Entgegenhaltungen:
- EP-A- 0 195 457
- DE-A- 3 914 003
- DE-A- 4 123 811
- ELEKTRONIK, Bd.37, Nr.22, 28. Oktober 1988, MUNCHEN DE Seiten 209 - 212 L. KLUGHERZ 'Brücke in die 16-Bit-Welt'
- ELEKTRONIK, Bd.38, Nr.4, 17. Februar 1989, MUNCHEN DE Seiten 48 - 56 T.HILL ET AL. 'Mikrocomputer in KFZ-Anwendungen'
- IBM TECHNICAL DISCLOSURE BULLETIN., Bd.30, Nr.4, September 1987, NEW YORK US Seiten 1714 - 1715 'Watchdog timer and one-shot to insure safe operation of a robotic manipulator'

## Beschreibung

### Stand der Technik

Die Erfindung geht aus von einer Vorrichtung zum Betreiben eines Mikroprozessors nach der Gattung des unabhängigen Anspruchs. Aus der US-A 4,734,871 ist eine Schaltung mit einem Mikroprozessor bekannt, der eine Steuerschaltung zum Vorgeben eines aktiven und eines inaktiven Betriebszustands enthält. Die bekannte Schaltung wird von einer Batterie mit elektrischer Energie versorgt. Zur Schonung der Batterie geht der Mikroprozessor in Abhängigkeit von einem internen Steuersignal in den energiesparenden inaktiven Zustand über. Kurz vor Eintritt in den inaktiven Zustand startet der Mikroprozessor einen Zeitgeber, der nach Ablauf der vorgegebenen Zeit ein Aufwecksignal an den Mikroprozessor abgibt. Ein korrektes Ansteuern des Zeitgebers ist bei einer aufgetretenen Störung im Mikroprozessor, die beispielsweise durch elektromagnetische Einwirkungen auftreten kann, nicht mehr sichergestellt.

Aus der EP-A 0 195 457 ist eine "Watchdog"-Schaltung zum Überwachen einer Schaltungsanordnung mit einem Mikrocomputer bekannt geworden. Die vorbekannte Schaltungsanordnung enthält eine Auswerteeinrichtung, die den zeitrichtigen Empfang von Kontrollimpulsen überwacht und Steuersignale zur Rücksetzung des Mikroprozessors und/oder zur Störungsmeldung abgibt. Die an zwei Kontrollimpulskanälen auftretenden Kontrollimpulse werden hinsichtlich einer vorgegebenen zeitlichen Zuordnung überwacht, wobei bei einem Abweichen ein Rücksetzsignal an den Mikroprozessor gegeben wird. Die vorbekannte Schaltungsanordnung enthält einen Taktgenerator, dessen Taktsignal beispielsweise eingesetzt wird zum Vermeiden, daß der Mikroprozessor fest in einem zurückgesetzten Zustand gehalten wird. Zu diesem Zweck maskiert das Taktsignal zeitweise ein gegebenenfalls vorhandenes Rücksetzsignal, damit der Mikroprozessor neu starten kann. Eine Unterscheidung zwischen einem aktiven und einem inaktiven Betriebszustand des Mikroprozessors ist nicht vorgesehen.

Der Erfindung liegt die Aufgabe zugrunde, einen Mikroprozessor in einem aktiven und einem inaktiven Betriebszustand mit hoher Betriebssicherheit zu betreiben.

Die Aufgabe wird durch die im Hauptanspruch angegebenen Merkmale gelöst.

### Vorteile der Erfindung

Erfindungsgemäß ist die periodische Zuführung eines Aufwecksignals vorgesehen, das von einem Oszillator bereitgestellt wird. Mit dieser Maßnahme ist ein sicheres Auslösen des aktiven Betriebszustands in allen Betriebssituationen möglich. Aufgetretene undefinierte Betriebszustände während des inaktiven Betriebs werden durch das periodische Aufwecksignal beendet. Fehlerhafte Zustände, die bei einem durch Störungen bedingten unbeabsichtigten Übergang in den inaktiven Betriebszustand auftreten, werden ebenfalls durch das periodisch auftretende Aufwecksignal beseitigt. Die erfindungsgemäße Vorrichtung ist mit einem einfach aufzubauenden Oszillator realisierbar. Die sichere Funktion und die hohe Verfügbarkeit des Mikroprozessors sind daher kostengünstig zu realisieren.

Vorteilhafte Weiterbildungen und Ausgestaltungen der erfindungsgemäßen Vorrichtung ergeben sich aus Unteransprüchen.

Besonders einfach ist der Oszillator mit einem CMOS-Inverter realisierbar, der mit einer Widerstands-Kondensator-Kombination beschaltet ist. Die Schaltung wird als Milleroszillator bezeichnet. Der Vorteil dieser Ausgestaltung liegt darin, daß ein noch unbenutzter Inverter innerhalb eines integrierten Schaltkreises in der Peripherie des Mikroprozessors verwendet werden kann.

Eine Weiterbildung sieht vor, daß eine im Mikroprozessor enthaltene Überwachungsschaltung (Watchdog) zum Überprüfen der Funktion des Mikroprozessors eingesetzt wird. Ein Ausfall eines im Mikroprozessor enthaltenen Taktgenerators infolge einer Störung, der gleichzeitig das ordnungsgemäße Arbeiten des Watchdogs verhindert, wird durch das periodisch auftretende Aufwecksignal behoben. Die in Verbindung mit der erfindungsgemäß vorgesehenen Maßnahme mögliche Verwendung des internen Watchdogs erhöht zusätzlich die Sicherheit der Funktion des Mikroprozessors.

In einer anderen Ausgestaltung ist vorgesehen, daß die im Mikroprozessor enthaltene Steuerschaltung zum Vorgeben des aktiven und des inaktiven Betriebszustands beim Übergang in den inaktiven Zustand sowohl den internen Taktgenerator als auch den Watchdog abschaltet. Mit dieser Maßnahme ergibt sich eine erheblich reduzierte Leistungsaufnahme im inaktiven Betriebszustand.

Eine weitere Erhöhung der Sicherheit des gesamten Systems, das den Mikroprozessor enthält, ergibt sich durch eine dynamische Ansteuerung einer Schaltstufe über eine Ausgangsleitung des Mikroprozessors. Im Störungsfall ist mit dieser Maßnahme die Schaltstufe deaktiviert. Eine Weiterbildung sieht vor, daß das dynamische Ausgangssignal einen Schalter betätigt, der in einer anderen Ausgangsleitung des Mikroprozessors liegt, die zu einer Schaltstufe führt. Mit dieser Maßnahme ist ebenfalls eine dynamische Ansteuerung der Schaltstufe gegeben, wobei im Einschaltzustand des vom dynamischen Signal betätigten Schalters ein kontinuierlicher Ausgangsstrom vom Mikroprozessor bereitgestellt werden kann.

Die hohe Sicherheit gegenüber Störsignalen und gegenüber elektromagnetischen Störfeldern ermöglicht den Einsatz der Vorrichtung in einer entsprechend stark gestörten Umgebung. Eine solche Umgebung ist beispielsweise ein vom Mikroprozessor 10 gesteuerter Elektromotor, der vorzugsweise innerhalb eines Verstellantriebs angeordnet ist. Durch die mögliche Anordnung des Mikroprozessors 10 und gegebenenfalls weiterer elektrischer Komponenten in unmittelbarer Motornähe ergeben sich konstruktive Vereinfachungen, die sich insbesondere in einer Serienfertigung kostengünstig bemerkbar machen. Die erfindungsgemäße Vorrichtung ist deshalb insbesondere geeignet zur Verwendung in Verstellantrieben, die in Kraftfahrzeugen angeordnet sind.

Weitere vorteilhafte Weiterbildungen und Verbesserungen der erfindungsgemäßen Vorrichtung zum Betreiben eines Mikroprozessors ergeben sich aus weiteren Unteransprüchen in Verbindung mit der folgenden Beschreibung.

### Zeichnung

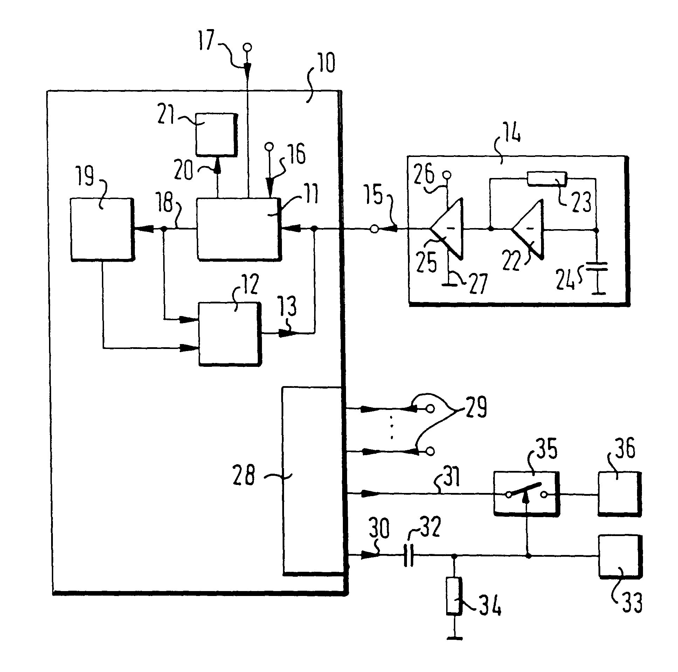

In der Figur ist ein Blockschaltbild einer erfindungsgemäßen Vorrichtung zum Betreiben eines Mikroprozessors dargestellt.

Die Figur zeigt einen Mikroprozessor 10, der eine Steuerschaltung 11 zum Vorgeben eines aktiven und eines inaktiven Betriebszustands des Mikroprozessors 10 enthält. Die Steuerschaltung 11 erhält von einem im Mikroprozessor 10 angeordneten Watchdog 12 ein internes Aufwecksignal 13 und ein von einem Oszillator 14 abgegebenes externes Aufwecksignal 15 zugeleitet. Die Steuerschaltung 11 erhält weiterhin ein internes Abschaltsignal 16 und ein externes Abschaltsignal 17 zugeführt. Die Steuerschaltung 11 gibt Ein- und Ausschaltesignale 18 an einen im Mikroprozessor 10 enthaltenen Taktgenerator 19 und an den Watchdog 12 ab. Ein weiteres, von der Steuerschaltung 11 abgegebenes Auswahlsignal 20 wird an einen Speicher 21 abgegeben.

Der Oszillator 14 enthält einen Inverter 22, der mit einer Widerstands-Kondensator-Kombination 23, 24 beschaltet ist. Der Widerstand 23 führt vom invertierenden Eingang zum Ausgang. Der Kondensator 24 ist zwischen dem invertierenden Eingang und einer Masse geschaltet. Der Ausgang des Inverteres 22 ist mit einem Eingang eines weiteren Inverters 25 verbunden, der an seinem Ausgang das externe Aufwecksignal 15 abgibt. Am weiteren Inverter 25 sind die beiden Stromversorgungsleitungen 26, 27 für den Oszillator 14 eingetragen.

Der Mikroprozessor 10 enthält eine Eingangs-Ausgangsschaltung 28 die mehrere Leitungen 29 enthält, die als Eingangs- oder als Ausgangsleitung schaltbar sind. Weiterhin sind eine erste Ausgangsleitung 30 sowie eine zweite Ausgangsleitung 31 vorgesehen. Die erste Ausgangsleitung 30 führt über einen Kondensator 32 an eine erste Schaltstufe 33. Zwischen Kondensator 30 und der ersten Schaltstufe 33 ist ein Widerstand 34 gegen Masse geschaltet. Die zweite Ausgangsleitung 31 führt über einen Schalter 35 zu einer zweiten Schaltstufe 36. Der Schalter 35 wird von dem Signal betätigt, das der ersten Schaltstufe 33 zugeleitet ist.

### Die erfindungsgemäße Vorrichtung arbeitet folgendermaßen:

Der Mikroprozessor 10 enthält die Steuerschaltung 11, die eine Vorgabe eines aktiven und eines inaktiven Betriebszustands des Mikroprozessors 10 ermöglicht. Ein solcher Mikroprozessor 10 ist beispielsweise von dem Hersteller Motorola Inc. unter der Bezeichnung MC 68 HC 04 P 3 verfügbar. Der Vorteil des inaktiven Betriebszustands liegt darin, daß die Leistungsaufnahme auf ein Mindestmaß abgesenkt ist. In Abhängigkeit von einem internen oder von einem externen Abschaltsignal 16, 17 veranlaßt die Steuerschaltung 11 das Abschalten von unterschiedlichen Funktionseinheiten innerhalb des Mikroprozessors 10. Das interne Abschaltsignal 16 kann beispielsweise programmgesteuert erzeugt werden. Im gezeigten Ausführungsbeispiel ist vorgesehen, daß das von der Steuerschaltung 11 abgegebene Ein- und Ausschaltsignal 18 zumindest dem Taktgenerator 19 sowie dem Watchdog 12 zugeleitet ist. Im inaktiven Betriebszustand des Mikroprozessors 10 sind daher der Taktgenerator 19 sowie der Watchdog 12 abgeschaltet. Mit dieser Maßnahme ergibt sich eine erhebliche Leistungsreduzierung im inaktiven Betriebszustand.

Ein Aufwecken des Mikroprozessors 10 ist beispielsweise mit dem im Ausführungsbeispiel gezeigten internen Aufwecksignal 13 möglich, das der Watchdog 12 abgibt. Das Aufwecksignal 13 wird vom Watchdog 12 bei einem festgestellten Fehler innerhalb des Mikroprozessors 10 abgegeben. Zur Durchführung dieser Aufgabe sind dem Watchdog 12 interne Signale zuzuführen, die beispielsweise auf die Einhaltung bestimmter zeitlicher Zusammenhänge überprüft werden. Ein an die Steuerschaltung 11 gelegtes Aufwecksignal veranlaßt die Ausgabe des Signals 18 zum Einschalten des Taktgenerators 19 sowie des Watchdogs 12. Weiterhin wird ein Auswahlsignal 20 an einen Speicher 21 abgegeben, das den Mikroprozessor 10 zum Abarbeiten einer vorgegebenen Programmstelle im Speicher 21 veranlaßt.

Ein Aufwecken des Mikroprozessors 10 ist weiterhin mit dem Bereitstellen des externen Aufwecksignals 15 möglich, das der Steuerschaltung 11 zugeführt wird. Das Aufwecksignal 15 wird von dem Oszillator 14 abgegeben, der ein periodisches Signal erzeugt. Der Mikroprozessor 10 wird deshalb in periodisch wiederkehrenden Zeitabständen aufgeweckt. Das Aufwecken erfolgt unabhängig vom gerade vorliegenden Betriebszustand. Die Periodendauer des Aufwecksignals 15 sollte derart bemessen sein, daß der Mikroprozessor 10 möglichst lange im inaktiven Betriebszustand verbleibt, um eine niedrige mittlere Energieaufnahme zu erzielen. Andererseits sollte die Periodendauer kurz genug sein, um genügend schnell auf eine geänderte Betriebssituation reagieren zu können. Eine geänderte Betriebssituation kann dem Mikroprozessor 10 beispielsweise über die als Eingänge geschalteten Leitungen 29 mitgeteilt werden.

Eine während des inaktiven Zustands des Mikroprozessors 10 auftretende Störung, die zu einem Fehlverhalten des Mikroprozessors 10 führen kann, wirkt sich nur solange aus, bis der Oszillator 14 erneut das Aufwecksignal 15 abgibt. Danach hat der Mikroprozessor 10 wieder die Möglichkeit, an einem definierten Programmabschnitt zu beginnen.

Eine Störung, die während des normalen Betriebs des Mikroprozessors 10 auftritt, kann beispielsweise zu einem unbeabsichtigten Auslösen des inaktiven Betriebszustandes führen. Eine Störung könnte auch beispielsweise nur das Anhalten des Taktgenerators 19 verursachen. In allen diesen Fällen ist der Watchdog 12 nicht mehr in der Lage, einen fehlerhaften Betriebszustand zu erkennen und das interne Aufwecksignal 13 abzugeben, das einem Rücksetzsignal in einem definierten Zustand gleichkommt. Die erfindungsgemäße Maßnahme stellt auch in diesem fehlerhaften Betriebszustand durch das periodische Abgeben des Aufwecksignals 15 eine erneute Funktionsbereitschaft des Mikroprozessors durch Aufwecken wieder her.

Während eines undefinierten Betriebszustandes können fehlerhafte Ansteuersignale für die vom Mikroprozessor 10 betätigten Schaltstufen 33, 36 ausgegeben werden, die zu gefährlichen Betriebszuständen des Gesamtsystems führen können. In einer Weiterbildung der erfindungsgemäßen Vorrichtung ist deshalb eine dynamische Ankopplung der Schaltstufen 33, 36 vorgesehen. Eine dynamische Ankopplung wird mittels der Kondensator-Widerstands-Kombination 32, 34 erhalten, die eine Hochpaß-Filterfunktion aufweist. In Abhängigkeit von der Ausgestaltung einer Eingangsschaltung der ersten Schaltstufe 33 und in Abhängigkeit von der Bemessung des Kondensators 32 und des Widerstands 34 sowie in Abhängigkeit von der Wiederholrate des auf der ersten Ausgangsleitung 30 liegenden Ausgangssignals kann auf eine Kurzzeitspeicherung verzichtet werden. Eine erste Schaltstufe 33, die ein getaktetes Steuersignal verkraftet, ermöglicht ebenfalls die Ansteuerung mit Impulsen.

In einer anderen Ausgestaltung ist vorgesehen, daß eine anzusteuernde zweite Schaltstufe 36 über den Schalter 35 mit der zweiten Ausgangsleitung 31 verbunden ist. Das Signal an der zweiten Ausgangsleitung 31 wird kontinuierlich ausgegeben. Die dynamische Ansteuerung des Schalters 35, die bei einem Ausfall von Ausgangssignalen zumindest auf der ersten Ausgangsleitung 30 ein Öffnen des Schalters 35 bewirken, verhindert gefährliche Situationen an der zweiten Schaltstufe 36. Der Vorteil dieser Ausgestaltung liegt darin, daß über die zweite Ausgangsleitung 31 ein stationärer Strom vom Mikroprozessorausgang abgegeben werden kann. Auf eine Kurzzeitspeicherung des Steuersignals für den Schalter 35 kann unter den bereits weiter oben genannten Voraussetzungen entfallen. Anstelle der Ausgestaltung der Eingangsschaltung der ersten Schaltstufe 33 ist die Ausgestaltung der Ansteuerung des Schalters 35 zu betrachten.

Der Oszillator 14 ist vorzugsweise mit dem Inverter 22 realisiert, der mit dem Widerstand 23 und dem Kondensator 24 als Oszillator beschaltet ist. Diese Schaltung wird als Milleroszillator bezeichnet. Das Ausgangssignal des Inverters 22 wird dem zweiten Inverter 25 zugeleitet, der eine Impulsformung vornimmt. Für die wesentliche Funktion ist der weitere Inverter 25 nicht erforderlich. Der Inverter 22 sowie der weitere Inverter 25 sind vorzugsweise in CMOS-Technik hergestellt, die einen niedrigen Energiebedarf aufweist. Die Verwendung eines Inverters 22 als aktives Element des Oszillators 14 ist insbesondere zweckmäßig, wenn ein derartiger Inverter in Bauelementen, die dem Mikroprozessor 10 zugeordnet sind, noch zur Verfügung steht. Ein integrierter Schaltkreis, der sechs solcher Inverter enthält, ist beispielsweise unter der Bezeichnung CD 40 106 von unterschiedlichen Herstellern erhältlich.

Die hohe Sicherheit gegenüber Störungen und die damit verbundene hohe Verfügbarkeit des Systems, das den Mikroprozessor 10 enthält, ermöglicht einen Einsatz in einer Umgebung, bei der mit hohen elektromagnetischen Störfeldern zu rechnen ist. Ein solcher Ort ist beispielsweise die Nähe eines Elektromotors, der vorzugsweise mittels der Schaltstufen 33, 36 ein- und ausgeschaltet wird. Der Mikroprozessor 10 sowie die weiteren elektrischen Komponenten, wie beispielsweise der Oszillator 14, können in unmittelbarer Motornähe untergebracht werden. Die bauliche Vereinigung findet insbesondere Anwendungen bei Verstellantrieben, die beispielsweise in Kraftfahrzeugen zum Einsatz kommen. Bei diesem Einsatz ist eine möglichst geringe mittlere Energieaufnahme des Mikroprozessors 10 besonders wesentlich, damit die Kraftfahrzeugbatterie bei dauernd eingeschalteten Verstellantrieben nicht entladen wird.

## Patentansprüche

1. Vorrichtung zum Betreiben eines Mikroprozessors (10), mit einem Mikroprozessor (10), der eine Steuerschaltung (11) enthält zum Vorgeben eines aktiven und eines stromsparenden inaktiven Betriebszustands, der weiterhin einen Eingang aufweist, an den ein Signal (15) zum Auslösen des aktiven Betriebszustands des Mikroprozessors (10) anlegbar ist, **dadurch gekennzeichnet, dass** ein Oszillator (14) vorgesehen ist, der ein periodisches Signal (15) bereitstellt, das dem Eingang des Mikroprozessors (10) als Aufwecksignal zum Auslösen des aktiven Betriebszustands unabhängig vom gerade vorliegenden Betriebszustand des Mikroprozessors (10) zugeführt ist.

2. Vorrichtung nach Anspruch 1, **dadurch gekennzeichnet, daß** der Oszillator (14) einen CMOS-Inverter (22) enthält, der mit einer Widerstands-Kondensator-Kombination (23, 24) beschaltet ist.

3. Vorrichtung nach Anspruch 1, **dadurch gekennzeichnet, daß** der Mikroprozessor (10) einen Watchdog (12) enthält, der ein internes Aufwecksignal (13) an die Steuerschaltung (11) abgibt.

4. Vorrichtung nach Anspruch 1 oder 3, **dadurch gekennzeichnet, daß** die Steuerschaltung (11) beim Eintritt in den inaktiven Betrieb einen im Mikroprozessor (10) enthaltenen Taktgenerator (19) und den Watchdog (12) abschaltet.

5. Vorrichtung nach Anspruch 1, **dadurch gekennzeichnet, daß** wenigstens eine vom Mikroprozessor (10) angesteuerte Schaltstufe (33, 36) dynamisch angesteuert ist.

6. Vorrichtung nach Anspruch 5, **dadurch gekennzeichnet, daß** das dynamische Ausgangssignal einen Schalter (35) steuert, der ein auf einer zweiten Ausgangsleitung (31) abgegebenes Ausgangssignal des Mikroprozessors (10) zu einer Schaltstufe (36) weiterleitet.

7. Vorrichtung nach Anspruch 1, **gekennzeichnet durch** die Verwendung in einem elektromotorischen Verstellantrieb.

8. Vorrichtung nach Anspruch 7, **dadurch gekennzeichnet, daß** der Mikroprozessor (10) in Motornähe angeordnet ist.

9. Vorrichtung nach Anspruch 7, **dadurch gekennzeichnet, daß** der Verstellantrieb in einem Kraftfahrzeug angeordnet ist.

## Claims

1. Apparatus for operating a microprocessor (10), having a microprocessor (10) which contains a control circuit (11) for prescribing an active operating state and a power-saving inactive operating state and also has an input to which a signal (15) for triggering the active operating state of the microprocessor (10) can be applied, **characterized in that** an oscillator (14) is provided which supplies a periodic signal (15) supplied to the input of the microprocessor (10) as a wake-up signal for triggering the active operating state irrespective of the current operating state of the microprocessor (10).

2. Apparatus according to Claim 1, **characterized in that** the oscillator (14) contains a CMOS invertor (22) which is connected to a resistor/capacitor combination (23, 24).

3. Apparatus according to Claim 1, **characterized in that** the microprocessor (10) contains a watchdog (12) which outputs an internal wake-up signal (13) to the control circuit (11).

4. Apparatus according to Claim 1 or 3,
**characterized in that** the control circuit (11) turns off a clock generator (19), contained in the microprocessor (10), and the watchdog (12) when the inactive mode is entered.

5. Apparatus according to Claim 1, **characterized in that** at least one switching stage (33, 36) driven by the microprocessor (10) is driven dynamically.

6. Apparatus according to Claim 5, **characterized in that** the dynamic output signal controls a switch (35) which forwards an output signal which is output by the microprocessor (10) on a second output line (31) to a switching stage (36).

7. Apparatus according to Claim 1, **characterized by** use in an electric-motor adjusting drive.

8. Apparatus according to Claim 7, **characterized in that** the microprocessor (10) is arranged close to the motor.

9. Apparatus according to Claim 7, **characterized in that** the adjusting drive is arranged in a motor vehicle.

## Revendications

1. Dispositif de mise en oeuvre d'un microprocesseur (10) comprenant un microprocesseur (10) équipé d'un circuit de commande (11) pour prédéfinir un état de fonctionnement actif et un état de fonctionnement inactif d'économie de courant, ayant en outre une entrée recevant un signal (15) pour déclencher l'état de fonctionnement actif du microprocesseur (10),
**caractérisé par**
un oscillateur (14) fournissant un signal périodique (15) appliqué à l'entrée du microprocesseur (10) comme signal de réveil pour déclencher l'état de fonctionnement actif, indépendamment de l'état de fonctionnement du microprocesseur (10).

2. Dispositif selon la revendication 1,
**caractérisé en ce que**
l'oscillateur (14) comporte un inverseur CMOS (22) relié à un montage résistance-condensateur (23, 24).

3. Dispositif selon la revendication 2,
**caractérisé en ce que**
le microprocesseur (10) comporte un circuit de surveillance (chien de garde) (12) qui fournit un circuit de réveil (13) au circuit de commande (11).

4. Dispositif selon les revendications 1 ou 3,
**caractérisé en ce qu'**
à l'entrée en mode de fonctionnement inactif, le circuit de commande (11) coupe un générateur d'horloge (10) et le circuit de surveillance (12) du microprocesseur (10).

5. Dispositif selon la revendication 1,
**caractérisé en ce qu'**
au moins un étage de commutation (33, 36) commandé par le microprocesseur (10) est commandé de manière dynamique.

6. Dispositif selon la revendication 5,
**caractérisé en ce que**
le signal de sortie dynamique commande un interrupteur (35) qui transmet un signal de sortie du microprocesseur (10) par une seconde ligne de sortie (31) vers un étage de commutation (36).

7. Dispositif selon la revendication 1,
**caractérisé par**
son application à un actionneur à moteur électrique.

8. Dispositif selon la revendication 7,
**caractérisé en ce que**
le microprocesseur (10) est installé à proximité du moteur.

9. Dispositif selon la revendication 7,
**caractérisé en ce que**
l'actionneur équipe un véhicule automobile.
